# FASCICULE DE BREVET EUROPEEN

(11) **EP 3 867 895 B1**
(45) Date de publication et mention de la délivrance du brevet: **26.08.2026**
(21) Numéro de dépôt: 19786801.1
(22) Date de dépôt: 17.10.2019
(51) Int. Cl.: G09B 9/12, G09B 9/46

(54) **SYSTÈME DE VIBRATIONS DE CABINE DE PILOTAGE POUR SIMULATEUR**
VIBRATIONSSYSTEM FÜR PILOTENKABINENSIMULATOR
VIBRATION SYSTEM FOR PILOT CABIN SIMULATOR

(30) Priorité: 18.10.2018 FR 1801100
(43) Date de publication de la demande: 25.08.2021
(73) Titulaire: THALES, 92400 Courbevoie (FR)
(72) Inventeur: DISPAGNE, Rémy, 95523 Cergy Pontoise (FR); BONNET, Maxime, 78000 Versailles (FR); LE GUILLOU, René, 78310 Maurepas (FR)
(74) Mandataire: Atout PI Laplace
(86) Numéro de dépôt international: PCT/EP2019/078230
(87) Numéro de publication internationale: WO 2020/079158

(56) Documents cités:
- CN-A- 102 289 965
- KR-B1- 101 165 573
- ANONYMOUS: "Annex to ED Decision 2012/011/R - European Aviation Safety Agency - Certification Specifications for Helicopter Flight Simulation Training Devices", 26 June 2012 (2012-06-26), pages 1 - 4, XP055584411, Retrieved from the Internet <URL:https://www.easa.europa.eu/sites/default/files/dfu/CS-FSTD(H)%20Initial%20Issue.pdf> [retrieved on 20190430]
- KIM ROSENLOF: "Simulator technology takes helicopter training into the future", 28 February 2018 (2018-02-28), pages 1 - 11, XP055584642, Retrieved from the Internet <URL:https://www.ainonline.com/sites/default/files/pdf/ain_2018_specialreport_v.pdf> [retrieved on 20190430]
- A CERUTI ET AL: "Improving Helicopter Flight Simulation with Rotor Vibrations", PROCEEDINGS OF THE IMPROVE 2011 INTERNATIONAL CONFERENCE ON INNOVATIVE METHODS IN PRODUCT DESIGN JUNE 15 TH - 17 TH, 17 June 2011 (2011-06-17), pages 636 - 645, XP055584646, Retrieved from the Internet <URL:http://www.improve2011.it/Full_Paper/129.pdf> [retrieved on 20190430]

## Description

### Domaine technique

L'invention concerne le domaine des simulateurs aéronautiques et propose un système de vibrations de cabine de pilotage.

### Etat de la technique

Les vibrations qui existent à bord d'un avion sont omniprésentes, et dans une cabine de pilotage qui contient de nombreux équipements tels les sièges, la planche de bord, les commandes, elles sont importantes. La simulation des vibrations existant dans une cabine ou un cockpit doit permettre de reproduire les vibrations réelles et pour un simulateur d'aéronef, la reproduction est soumise à des normes sévères.

Un exemple est celui des simulateurs d'hélicoptères certifiés « level D », pour lesquels les normes EASA CS-FSTD(H) ou FAA 14CFR part 60 imposent de respecter le spectre de vibration des hélicoptères de manière bien différencié dans les 3 axes XYZ et sur chacun des sièges, qui peuvent retrouvées dans le document « Annex to ED Decision 2012/011/R - European Aviation Safety Agency - Certification Specifications for Helicopter Flight Simulation Training Devices", 26 juin 2012 (2012-06-26), pages 1-4, XP055584411 .

La référence pour agréer de la conformité des vibrations est mesurée sous le siège pilote. Les fréquences des vibrations exigées couvrent une large plage de fréquence, généralement de 5 à 35HZ.

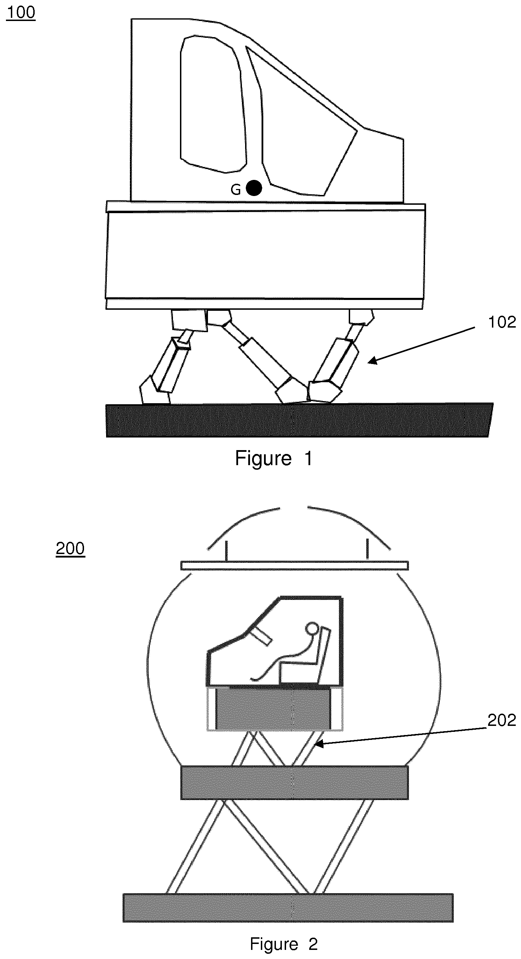

Des solutions de système de vibrations pour simulateur d'aéronef habituellement utilisées consistent à faire vibrer l'ensemble de la cabine. La figure 1 illustre schématiquement une cabine d'un simulateur (100) équipée d'un système de vibrations (102) qui vise à faire vibrer toute la cabine. Dans cette solution les actionneurs qui permettent de faire vibrer toute la cabine, au nombre de trois dans l'exemple, sont éloignés de la cabine. Tel que montré sur la figure, le centre de gravité 'G' de l'ensemble est alors trop haut par rapport au système de vibrations. De surcroit, un tel système de vibration délivre un mouvement 6 axes qui est mal adapté aux vibrations. En effet, en faisant vibrer l'ensemble de la cabine, les différents sous-ensembles tels la planche de bord ou les commandes sont soumis à des vibrations et à des résonnances non maitrisées. Il en résulte des résonnances parasites et il est alors impossible de différencier les axes X, Y et Z et donc de reproduire les accélérations requises dans les 3 axes XYZ.

De plus, compte-tenu des résonnances mécaniques et du manque de rigidité des éléments de transmission, dont la soute, les commandes de vol, les palettes, il n'est pas possible d'obtenir les accélérations souhaitées sur chacun des sous-ensembles de la cabine (les sièges, la planche de bord, les commandes). Pour y remédier, il faudrait avoir des structures extrêmement rigides qui en contrepartie amèneraient des fréquences de résonance trop élevées, et rendraient une telle solution inapplicable à un ensemble complet tel qu'une cabine d'aéronef.

Par ailleurs, une autre exigence pour les simulateurs est qu'il ne faut pas perturber l'environnement qui souvent est un système visuel qui est sensible aux vibrations. Comme les vibrations sont générées sur un système qui lui-même est en mouvement, il met en vibration une masse importante qui par contre réaction fait vibrer l'ensemble de la structure. Il est donc souhaitable d'avoir un système de vibrations qui travaille indépendamment de sa position dans l'espace et des accélérations auxquelles il peut être soumis.

D'autres solutions de système de vibrations pour simulateur d'aéronef consistent à faire vibrer uniquement le siège du pilote suivant les trois axes XYZ. La figure 2 montre de manière schématique un simulateur d'aéronef (200) équipé d'un système de vibrations (202) qui permet de faire vibrer le siège du pilote. Bien que répandu, ce système ne peut être certifié. En effet selon les normes internationales, il faut faire vibrer la cabine ou la plate-forme car le pilote doit ressentir d'une part les vibrations au niveau du siège mais aussi au niveau des pieds et des instruments. Or, cette solution est composée d'accéléromètres posés au niveau du plancher de la cabine, et ne fait pas faire vibrer ni les pieds qui sont une part importante des sensations du pilote, ni le manche, ni les composants de l'environnement de la cabine. Par ailleurs, le siège et le pilote sont soumis à des vibrations parasites qui ne permettent pas d'effectuer des mesures objectives car pour des raisons de fiabilité, les données ne peuvent être enregistrées que sous le siège. Il est donc souhaitable d'avoir un système de vibrations qui permette de prendre les mesures sur le plancher pour ne pas être perturbé et qui permette à la fois de prendre en compte toutes les vibrations.

La demande de brevet EP 2246832 A1 présente un système de vibrations pour simulateur qui consiste à faire vibrer le siège du pilote, le manche et la planche des commandes grâce à des petites masses excentrées qui tournent à une certaine vitesse permettant d'avoir la fréquence voulue. Pour générer les vibrations au niveau du siège, la masse excentrée est fixée sous le siège, le moteur pour faire tourner cette masse prenant appui sur l'arrière du siège qui par contreréaction le fait vibrer. La vitesse du moteur peut varier, par contre il n'est pas possible de modifier les masses en temps réel et il n'est donc pas possible de faire varier l'amplitude de la vibration. Par ailleurs, la vibration générée n'est pas directionnelle. En effet, la masse excentrée fait vibrer l'ensemble du siège et n'a pas de direction privilégiée. Aussi, une telle solution ne peut être certifiée « level D » car le système de vibrations qui agit sur le siège ne permet pas de commander indépendamment les trois axes X, Y ou Z et il ne permet pas de faire varier l'amplitude en temps réel. Or les mesures pour la certification pour un hélicoptère par exemple, sont effectuées sur le plancher sous le siège, car une mesure sur le siège est trop dépendante de facteurs ponctuels non représentatifs, comme la fréquence de résonnance du siège ou encore la position du pilote.

D'autres documents présentent des solutions pour générer des vibrations dans des simulateurs comme la demande de brevet KR101165573B1 qui propose une solution pour un simulateur d'aéronef avec un seul axe de vibration ou la demande de brevet CN 102 289 965 A qui propose une solution pour un simulateur terrestre pour générer des vibrations uniquement sous le siège du pilote.

Aussi, il est proposé par la présente invention, une solution qui répond aux différents besoins précités.

### Résumé de l'invention

Un objet de la présente invention est de proposer un système qui permet de générer des vibrations pour un simulateur d'aéronef. Avantageusement, le système de l'invention permet de reproduire les vibrations réelles existant dans une cabine d'aéronef.

Le principe général pour faire vibrer l'ensemble d'une cabine consiste à équiper la cabine d'un système de vibrations modulaire comprenant plusieurs modules de vibration indépendants (par exemple un module pour la partie pilote, un module pour la partie copilote, un module pour la planche de bord et le pylône) et où chaque module variables. La planche de bord et le pylône ont chacun un système de vibrations simplifié qui permet d'obtenir le bon niveau d'amplitude indépendamment.

Parmi les avantages de ce nouveau système de vibrations, il faut citer :
- la précision : le système de vibrations est précis pour chaque module. Pour le pilote et le copilote les systèmes sont indépendants et les actionneurs sont placés directement sous les sièges, permettant de maitriser les accélérations sous chaque siège.
- le faible impact sur l'environnement : le système réduit les perturbations sur l'environnement. Les masses mises en jeu étant faibles, il y a une très faible répercussion sur l'environnement comme le visuel. De plus les vibrations parasites sont filtrées par la soute de la cabine. Par ailleurs, chaque module peut être commandé en opposition de phase et ainsi annuler les répercussions sur le visuel.
- l'encombrement global qui est réduit.
- la certification : le système est conforme aux exigences pour une certification « level D » dans le domaine de la simulation.

A cet effet, l'invention a pour objet un système de vibrations pour cabine de pilotage de simulateur qui comprend au moins un siège pilote. Le système de vibrations comprend un module de vibrations pour le siège pilote, le module de vibrations pour siège étant composé d'une plateforme ayant une face supérieure sur laquelle est fixé le siège pilote et une face inférieure à laquelle est couplée une motorisation. La motorisation comprend des moyens mécaniques indépendants permettant de faire vibrer la plateforme selon trois axes orthogonaux, et est couplée à un module de commande configuré pour actionner indépendamment chaque moyen mécanique et faire varier en temps-réel l'amplitude des mouvements vibratoires de la plateforme selon chaque axe orthogonal.

Selon des modes de réalisation alternatifs ou combinés :
- le système comprend de plus un module de vibrations pour planche de bord couplé à la planche de bord de la cabine de pilotage, le module de vibrations pour planche de bord étant actionné pour faire vibrer la planche de bord, de manière autonome et indépendante du module de vibrations pour siège ;
- le système comprend de plus un module de vibrations pour pylône couplé au pylône de la cabine de pilotage, le module de vibrations pour pylône étant actionné pour faire vibrer le pylône, de manière autonome et indépendante du modules de vibrations pour siège ;
- le système comprend de plus un module de vibrations pour pylône couplé au pylône de la cabine de pilotage, le module de vibrations pour pylône étant actionné pour faire vibrer le pylône, de manière autonome et indépendante du modules de vibrations pour planche de bord ;
- la cabine de pilotage comprend de plus un siège copilote, et le système de vibrations comprend un module de vibrations pour ledit siège pilote ;
- le module de commande est configuré pour commander le module de vibrations de chaque siège pilote et copilote en opposition de phase ;
- la motorisation est hydraulique ou électrique ;
- la plateforme est réalisée dans un matériau rigide.

L'invention couvre aussi un simulateur d'hélicoptère qui comprend au moins un système de vibrations pour siège tel que revendiqué.

Plus généralement, l'invention porte aussi sur un simulateur d'aéronef qui comprend un système de vibrations pour cabine de pilotage tel que revendiqué.

### Description des figures

Différents aspects et avantages de l'invention vont apparaitre en appui de la description d'un mode préféré d'implémentation de l'invention mais non limitatif, avec référence aux figures ci-dessous :
La figure 1 illustre schématiquement une cabine d'un simulateur équipée d'un système de vibrations connu ;
La figure 2 illustre schématiquement une cabine d'un simulateur équipée d'un autre système de vibrations connu ;
La figure 3 illustre schématiquement un plancher de cabine de simulateur d'aéronef apte à être équipé de deux modules de vibrations pour siège dans un mode de réalisation du système de vibrations de l'invention ;
La figure 4 illustre schématiquement deux modules de vibrations pour siège dans un mode de réalisation pour équiper le plancher d'une cabine de simulateur d'aéronef ;
La figure 5 illustre schématiquement la motorisation d'un module de vibrations pour siège selon un des trois axes dans un mode de réalisation ; et
La figure 6 montre en vue de l'intérieur d'une cabine d'aéronef apte à être équipée de modules de vibrations selon l'invention ; et
La figure 7 montre sous une autre vue l'intérieur d'une cabine d'aéronef équipée de modules de vibrations pour planche de bord.

### Description détaillée de l'invention

D'une manière générale, l'invention propose un système qui consiste à générer des vibrations au niveau de chaque élément dans une cabine d'aéronef devant reproduire des vibrations réelles. La solution proposée comprend des systèmes de vibrations indépendants pour le pilote et pour le copilote ainsi que des systèmes de vibrations séparés pour les autres éléments ou sous-ensembles d'une cabine, comme la planche de bord ou le pylône.

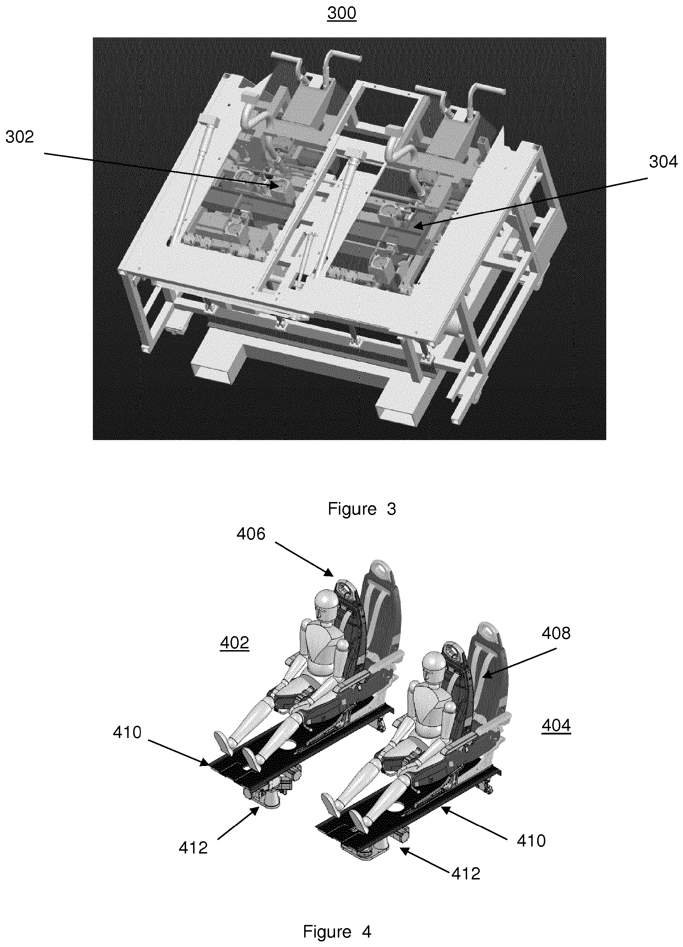

La figure 3 illustre schématiquement un plancher (300) d'une cabine de simulateur d'aéronef apte à être équipé de deux modules de vibrations, respectivement à chaque emplacement des sièges pilote (302) et copilote (304). Bien que la configuration illustrée montre une cabine avec deux sièges, le principe décrit s'applique à toute cabine mono-siège ou pour une cabine à deux sièges mais n'étant occupée que par un seul pilote.

La figure 4 illustre schématiquement un module de vibrations pour siège dans un mode de réalisation. L'exemple montre deux modules de vibrations pour siège (402, 404) pour équiper le plancher d'une cabine de simulateur d'aéronef tel que celui de la figure 3 par exemple.

Un module de vibrations pour siège selon l'invention est assigné à chaque siège (406, 408), un module pour le siège pilote et un module pour le siège co-pilote. En effet, avantageusement, l'indépendance des modules de vibrations permet que chaque module soit commandé séparément, avec une cinématique de vibrations dédiée à chaque module. Dans une configuration de cabine à double siège mais occupée seulement par un pilote, il devient possible d'appliquer des vibrations différenciées au siège occupé et au siège vide, permettant d'apporter plus de réalisme au pilote.

Par ailleurs, en commandant chaque siège séparément, il est possible de les commander en opposition de phase, et ainsi réduire la perturbation générée par les vibrations sur les systèmes environnants, comme le visuel.

Un module de vibrations pour siège (402 ou 404) est composé d'une plateforme (410) ayant une face supérieure sur laquelle est installé le siège (406 ou 408), et une face inférieure à laquelle est couplée un système de motorisation (412). Comme représenté sur la figure 4, le siège est monté sur un support de siège qui est fixé sur la plateforme, et qui permet de faire coulisser le siège sur un plan horizontal afin de s'adapter à la morphologie du pilote.

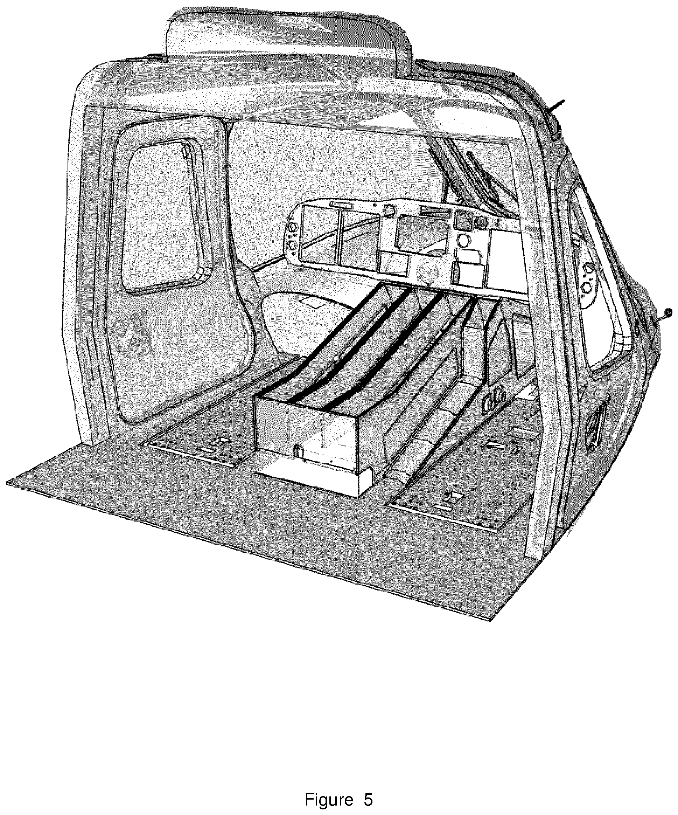

La plateforme une fois installée dans son emplacement (302, 304) fait partie du plancher de la cabine de pilotage. La figure 5 montre en vue de l'intérieur d'une cabine d'aéronef apte à être équipée de modules de vibrations selon l'invention.

Le système de motorisation (412) situé sous la plateforme, comprend des blocs actionneurs indépendants qui permettent de faire vibrer la plateforme (410) selon trois axes orthogonaux (X, Y, Z). Dans un mode de réalisation de la plateforme vibrante trois axes, chaque bloc actionneur comprend des moyens mécaniques de type moteur, vérins, biellettes agencés de manière à pouvoir appliquer des vibrations à l'avant et à l'arrière de la plateforme selon un axe de vibration dédié pour chacun. Un tel agencement est par exemple décrit dans la demande de brevet FR 2 684 316 A1 du déposant.

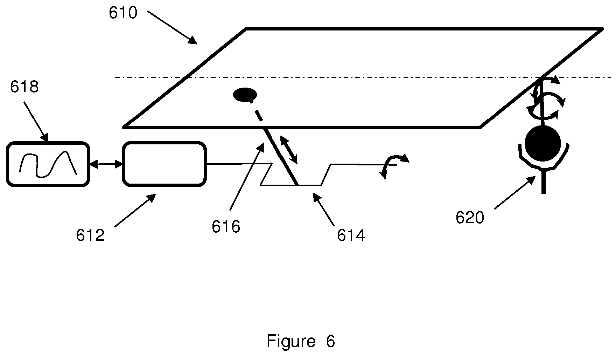

Le système de motorisation est couplé à un module de commande qui est configuré pour commander indépendamment chaque bloc actionneur, faire osciller la sortie du moteur, et ainsi déplacer la plateforme selon l'axe correspondant. La figure 6 illustre très schématiquement le principe de commande d'un seul bloc actionneur pour faire vibrer la plateforme (610) selon l'un des trois axes, comprenant un agencement mécanique ayant au moins un moteur (612) entraînant un axe type arbre à came ou excentrique (614), une liaison rigide (616) entre la came (614) et le plancher (610), et une liaison de type rotule (620) supportant également le plancher (610). Le système de motorisation complet comprend trois blocs actionneurs équivalents à celui décrit, chacun actionnant un degré de liberté correspondant à chacun des trois axes. La motorisation des plateformes peut être hydraulique ou électrique. Dans un mode de réalisation, la motorisation est réalisée par des moteurs électriques avec excentrique et transmission par bielles pour éviter les jeux et limiter les frottements.

Une alternative de réalisation du système de vibrations à modules séparés, est de générer les vibrations par des haut-parleurs spécifiques. Néanmoins dans ce cas les vibrations ne peuvent pas être différenciées entre les trois axes (X, Y, Z) et une telle solution ne peut être certifiée.

Chaque bloc actionneur est commandé indépendamment par un signal (618) calculé par la modélisation des vibrations de la plate-forme simulée, et qui permet de faire varier en temps-réel l'amplitude et la fréquence des mouvements vibratoires de la plateforme selon l'axe de vibration du bloc actionneur commandé. En reproduisant sous la plateforme des vibrations dans les trois axes, les vraies vibrations d'un aéronef sont transmises au siège pilote et aux pieds du pilote.

De manière préférentielle, la plateforme est réalisée dans un matériau rigide afin de ne pas présenter de résonnances. Avantageusement, cela permet de différencier les vibrations dans les trois axes (X, Y, Z). Par ailleurs, les masses mises en jeu étant faibles, cela permet d'avoir une compensation du poids par élastomère, et les vibrations sont ainsi faiblement répercutées sur le visuel.

Le principe de l'invention d'avoir des plateformes vibrantes séparées pour chaque pilote, permet de placer sous chaque plateforme des accéléromètres au même endroit que dans les systèmes réels afin de valider les performances du système de vibrations. On obtient ainsi l'accélération demandée à l'endroit exact où elles ont été enregistrées. En effet, les enregistrements sur les systèmes réels sont effectués en positionnant les accéléromètres sous les sièges pilote et copilote. Ce n'est pas le cas pour les solutions avec siège vibrant car la vibration est générée dans le siège et ne peut donc être validée. Ce n'est pas non plus le cas pour les solutions avec vibration de la cabine complète car les vibrations ne sont pas gérées pour chaque siège. La structure porteuse ne peut pas être suffisamment rigide. Il est alors impossible d'avoir les accélérations voulues sur le spectre de fréquence et pour la plage d'amplitude demandée. Ainsi avantageusement, le système de l'invention permet la certification de la cabine suivant les normes FAA et EASA.

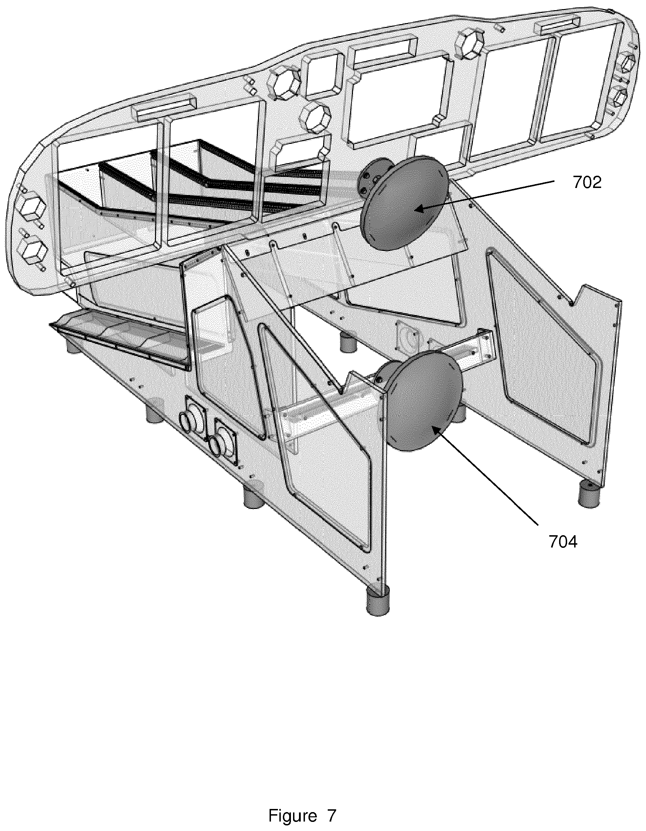

Le système de vibrations pour cabine de simulateur peut comprendre d'autres moyens de mise en vibration des éléments environnants en adaptant un système de vibrations indépendants pour chaque élément, comme la planche de bord et le pylône qui sont chacun mis en vibration par un système vibrant autonome. La figure 7 illustre schématiquement une autre vue de l'intérieur d'une cabine d'aéronef équipée de modules de vibrations (702, 704) pour planche de bord et pour pylône. Le module de vibrations pour planche de bord (702) peut être actionné pour faire vibrer la planche de bord, de manière autonome et indépendante du module de vibrations pour siège.

Ceci présente un avantage au regard des solutions connues qui font vibrer la cabine globalement, et où la vibration de la planche de bord par exemple n'est pas maitrisée.

Le module de vibrations pour pylône (704) est couplé au pylône de la cabine de pilotage, et peut être actionné pour faire vibrer le pylône, de manière autonome et indépendante du ou des modules de vibrations pour siège, et du module de vibrations pour planche de bord.

La présente description illustre un mode de réalisation préférentielle de l'invention, mais n'est pas limitative. Dans le cadre de la description, un simulateur d'aéronef est compris comme étant un simulateur d'un moyen de transport capable d'évoluer au sein de l'atmosphère terrestre. Par exemple, un simulateur d'aéronef peut être un simulateur d'avion ou d'hélicoptère. Ainsi, un exemple a été choisi pour permettre une bonne compréhension des principes de l'invention, et une application concrète, mais n'est pas exhaustif et la description permet à l'homme du métier d'apporter des modifications pour d'autres variantes d'implémentation. Par exemple, le système dans ses variantes trouvera aussi application sur des simulateurs de véhicules.

## Revendications

1. Un système de vibrations pour cabine de pilotage de simulateur aéronautique, la cabine comprenant au moins un siège pilote (406), le système de vibrations étant installé à l'intérieur de la cabine de pilotage et comprenant un module de vibrations (402) indépendant couplé à chaque siège pilote, ledit module de vibrations pour siège pilote étant composé d'une plateforme (410) constituant une partie du plancher (300) de la cabine de pilotage, ladite plateforme ayant une face supérieure sur laquelle est fixé le siège pilote et sur laquelle les pieds du pilote se posent, et ayant une face inférieure à laquelle est couplée une motorisation (412), ladite motorisation comprenant trois blocs actionneurs indépendants permettant de faire vibrer la plateforme selon trois axes orthogonaux linéaires, ladite motorisation étant couplée à un module de commande configuré pour actionner indépendamment chaque bloc actionneur par un signal qui permet de faire varier en temps-réel l'amplitude et la fréquence des mouvements vibratoires de la plateforme selon l'axe de vibration dudit bloc actionneur actionné.

2. Le système selon la revendication 1 comprenant de plus un module de vibrations pour planche de bord couplé à la planche de bord de la cabine de pilotage, le module de vibrations pour planche de bord étant actionnable pour faire vibrer la planche de bord, de manière autonome et indépendante du module de vibrations pour siège pilote.

3. Le système selon la revendication 1 comprenant de plus un module de vibrations pour pylône couplé au pylône de la cabine de pilotage, le module de vibrations pour pylône étant actionnable pour faire vibrer le pylône, de manière autonome et indépendante du module de vibrations pour siège pilote.

4. Le système selon la revendication 2 comprenant de plus un module de vibrations pour pylône couplé au pylône de la cabine de pilotage, le module de vibrations pour pylône étant actionnable pour faire vibrer le pylône, de manière autonome et indépendante du module de vibrations pour planche de bord.

5. Le système selon l'une quelconque des revendications 1 à 4 dans lequel la cabine de pilotage comprend de plus un siège copilote, et le système de vibrations comprend de plus un module de vibrations couplé audit siège copilote, le module de vibrations pour siège co-pilote étant composé d'une plateforme copilote ayant une face supérieure sur laquelle est fixé le siège copilote et une face inférieure à laquelle est couplée une motorisation, ladite motorisation comprenant des moyens mécaniques indépendants permettant de faire vibrer la plateforme copilote selon trois axes orthogonaux, ladite motorisation étant couplée audit module de commande configuré pour actionner indépendamment chaque moyen mécanique et faire varier en temps-réel l'amplitude des mouvements vibratoires de la plateforme copilote selon chaque axe orthogonal..

6. Le système selon la revendication 5 dans lequel le module de commande est configuré pour commander le module de vibrations de chaque siège pilote et copilote en opposition de phase.

7. Le système selon l'une quelconque des revendications 1 à 6 dans lequel la motorisation est hydraulique ou électrique.

8. Le système selon l'une quelconque des revendications 1 à 7 dans lequel la plateforme est réalisée dans un matériau rigide.

9. Un simulateur d'hélicoptère comprenant au moins un système de vibrations selon l'une quelconque des revendications 1 à 8.

10. Un simulateur d'aéronef comprenant un système de vibrations selon l'une quelconque des revendications 1 à 8.

## Patentansprüche

1. Vibrationssystem für ein Cockpit eines Luftfahrtsimulators, wobei das Cockpit mindestens einen Pilotensitz (406) umfasst, wobei das Vibrationssystem im Inneren des Cockpits installiert ist und ein unabhängiges Vibrationsmodul (402) umfasst, das mit jedem Pilotensitz gekoppelt ist, wobei das genannte Vibrationsmodul für den Pilotensitz aus einer Plattform (410) besteht, die einen Teil des Bodens (300) des Cockpits bildet, wobei die genannte Plattform eine Oberseite, an der der Pilotensitz befestigt ist und auf der die Füße des Piloten ruhen, und eine Unterseite aufweist, an die ein Antrieb (412) gekoppelt ist, wobei der genannte Antrieb drei unabhängige Betätigungsvorrichtungsblöcke umfasst, die es ermöglichen, die Plattform entlang dreier linearer orthogonaler Achsen in Schwingung zu versetzen, wobei der genannte Antrieb mit einem Steuerungsmodul gekoppelt ist, das dazu konfiguriert ist, jeden Betätigungsvorrichtungsblock unabhängig durch ein Signal zu betätigen, das es ermöglicht, die Amplitude und die Frequenz der Vibrationsbewegungen der Plattform entlang der Vibrationsachse des genannten betätigten Betätigungsvorrichtungsblocks in Echtzeit zu verändern.

2. System nach Anspruch 1, ferner umfassend ein Vibrationsmodul für eine Instrumententafel, das mit der Instrumententafel des Cockpits gekoppelt ist, wobei das Vibrationsmodul für eine Instrumententafel betätigbar ist, um die Instrumententafel autonom und unabhängig vom Vibrationsmodul für einen Pilotensitz in Schwingung zu versetzen.

3. System nach Anspruch 1, ferner umfassend ein Vibrationsmodul für einen Pylon, das mit dem Pylon des Cockpits gekoppelt ist, wobei das Vibrationsmodul für einen Pylon betätigbar ist, um den Pylon autonom und unabhängig vom Vibrationsmodul für einen Pilotensitz in Schwingung zu versetzen.

4. System nach Anspruch 2, ferner umfassend ein Vibrationsmodul für einen Pylon, das mit dem Pylon des Cockpits gekoppelt ist, wobei das Vibrationsmodul für einen Pylon betätigbar ist, um den Pylon autonom und unabhängig vom Vibrationsmodul für eine Instrumententafel in Schwingung zu versetzen.

5. System nach einem der Ansprüche 1 bis 4, wobei das Cockpit ferner einen Kopilotensitz umfasst, und das Vibrationssystem ferner ein Vibrationsmodul umfasst, das mit dem genannten Kopilotensitz gekoppelt ist, wobei das Vibrationsmodul für einen Kopilotensitz aus einer Kopilotenplattform besteht, die eine Oberseite, an der der Kopilotensitz befestigt ist, und eine Unterseite aufweist, an die ein Antrieb gekoppelt ist, wobei der genannte Antrieb unabhängige mechanische Mittel umfasst, die es ermöglichen, die Kopilotenplattform entlang dreier orthogonaler Achsen in Schwingung zu versetzen, wobei der genannte Antrieb mit dem genannten Steuerungsmodul gekoppelt ist, das dazu konfiguriert ist, jedes mechanische Mittel unabhängig zu betätigen und die Amplitude der Vibrationsbewegungen der Kopilotenplattform entlang jeder orthogonalen Achse in Echtzeit zu verändern.

6. System nach Anspruch 5, wobei das Steuerungsmodul dazu konfiguriert ist, das Vibrationsmodul jedes Pilotensitzes und Kopilotensitzes gegenphasig anzusteuern.

7. System nach einem der Ansprüche 1 bis 6, wobei der Antrieb hydraulisch oder elektrisch ist.

8. System nach einem der Ansprüche 1 bis 7, wobei die Plattform aus einem starren Material gefertigt ist.

9. Hubschraubersimulator, umfassend mindestens ein Vibrationssystem nach einem der Ansprüche 1 bis 8.

10. Luftfahrzeugsimulator, umfassend ein Vibrationssystem nach einem der Ansprüche 1 bis 8.

## Claims

1. Vibration system for a simulator cockpit, the cockpit comprising at least one pilot seat (406), the vibration system being installed inside the cockpit and comprising an independent vibration module (402) coupled to each pilot seat, said pilot seat vibration module being composed of a platform (410) constituting a part of the floor (300) of the cockpit, said platform having a top face to which the pilot seat is fixed and on which the pilot's feet rest, and having a bottom face to which a motor drive system (412) is coupled, said motor drive system comprising three independent actuator units allowing the platform to be made to vibrate on three linear orthogonal axes, said motor drive system being coupled to a control module configured to independently actuate each actuator unit by a signal which makes the amplitude and the frequency of the vibratory movements of the platform vary in real time on the vibration axis of said actuated actuator unit.

2. System according to claim 1, also comprising a vibration module for an instrument panel coupled to the instrument panel of the cockpit, the instrument panel vibration module being able to be actuated to make the instrument panel vibrate, autonomously and independently of the pilot seat vibration module.

3. System according to claim 1, also comprising a vibration module for a pedestal coupled to the pedestal of the cockpit, the pedestal vibration module being able to be actuated to make the pedestal vibrate, autonomously and independently of the pilot seat vibration module.

4. System according to claim 2, also comprising a pedestal vibration module coupled to the pedestal of the cockpit, the pedestal vibration module being able to be actuated to make the pedestal vibrate, autonomously and independently of the instrument panel vibration module.

5. System according to any one of claims 1 to 4, wherein the cockpit further comprises a copilot seat, and the vibration system further comprises a vibration module coupled to said copilot seat, the vibration module for copilot seat being composed of a copilot platform having a top face to which the copilot seat is fixed and a bottom face to which a motor drive system is coupled, said motor drive system comprising independent mechanical means allowing the copilot platform to be made to vibrate on three orthogonal axes, said motor drive system being coupled to said control module configured to independently actuate each mechanical means and vary, in real time, the amplitude of the vibratory movements of the copilot platform on each orthogonal axis.

6. System according to claim 5, wherein the control module is configured to control the vibration module of each pilot seat and copilot seat in phase opposition.

7. System according to any one of claims 1 to 6, wherein the motor drive system is hydraulic or electrical.

8. System according to any one of claims 1 to 7, wherein the platform is made from a rigid material.

9. Helicopter simulator comprising at least one seat vibration system according to any one of claims 1 to 8.

10. Aircraft simulator comprising a vibration system according to any one of claims 1 to 8.
